# EUROPEAN PATENT SPECIFICATION

(11) **EP 1 547 944 B1**
(45) Date of publication and mention of the grant of the patent: **07.05.2008**
(21) Application number: 04106560.8
(22) Date of filing: 14.12.2004
(51) Int. Cl.: B65G 23/34

(54) **Conveying belts drive system**
Antriebssystem für Förderbänder
Système d'entrainement pour un convoyeur à bande

(30) Priority: 17.12.2003 IT MI20030599 U
(43) Date of publication of application: 29.06.2005
(73) Proprietor: Marchetti, Antonio, 20142 Milano (IT)
(72) Inventor: Marchetti, Antonio, 20142 Milano (IT)
(74) Representative: Mittler, Enrico

(56) References cited:
- FR-A- 2 099 539
- GB-A- 816 192
- US-A- 4 572 760
- US-A- 5 060 786
- US-A1- 2003 132 088

## Description

The present invention relates to a device provided with an internal motor for the motorization of conveying belts for the motion of parallelepiped boxes.

Machines for the closure and/or the sealing of carton boxes are known which comprise conveying belts for the motion of the boxes along a support plane

The belts are generally two for each machine and driving systems are known with gearmotor groups applied to each single belt, or other similar systems composed by a motor group for each belts as before.

Said systems, being driven by two independent motors, don't guarantee the perfect synchronism of the movements of the two belts, causing possible defects in the closure treatment of the parallelepiped boxes Being possible a different translation speed of the two belts, and being the boxes retained by said belts, it is possible that the same belts assume a parallelogram base shape.

It is also known from US-A-4543150 of Augusto Marchetti a driving system composed by a single motor group which, by a transmission belt, moves a spline shaft that in turn, by two opposite angle transmissions, moves at the same time and with a perfect synchronism the two conveying belts, ensuring a motion of the box without longitudinal deformations, as disclosed in the preamble of claim 1.

The system used in said US patent has the motor group outside of the machine frame, causing additional dimensions and the no-unification of the motorization of the various models.

Object of the present invention is to provide a driving device that allows to maintain unchanged the features of the prior patent US-A-4543150, incorporating the unification of the motorization of the various models and reducing the dimensions

According to the present invention, said object is attained by means of a device as disclosed in claim 1.

The characteristics and the advantages of the present invention will be made evident by the following detailed description of an embodiment thereof, which is illustrated as non-limiting example in the enclosed drawings, in which:

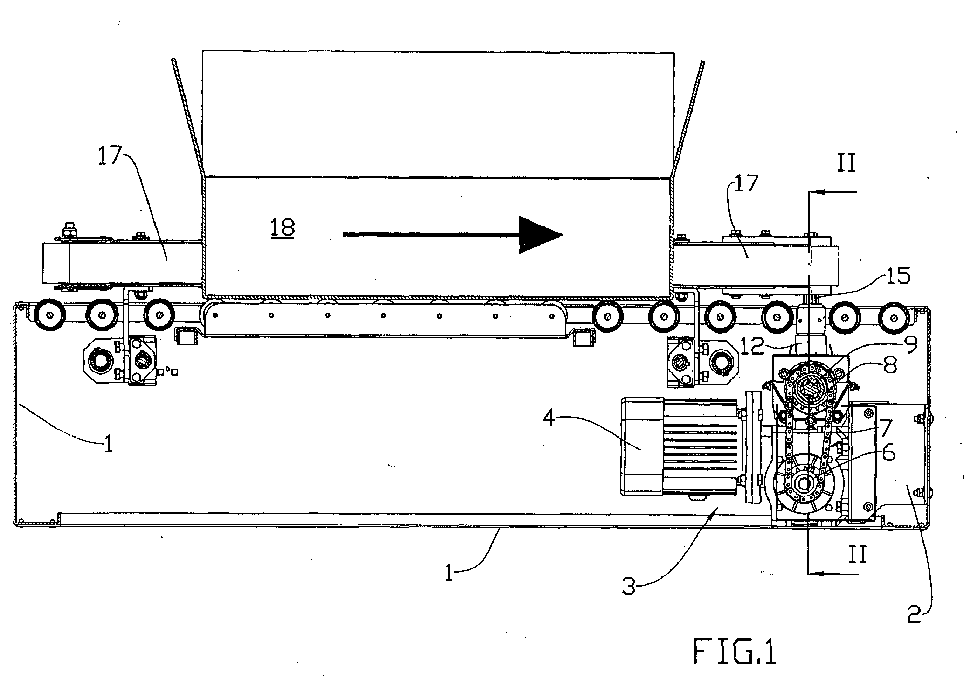

Fig. 1 shows a longitudinal sectional view of a machine with a device according to the present invention;
Fig. 2 shows a transversal sectional view according to the line II-II of figure 1.

The machine shown in the drawings comprises a frame 1 which holds up a motor group 3 by means of a connection support 2.

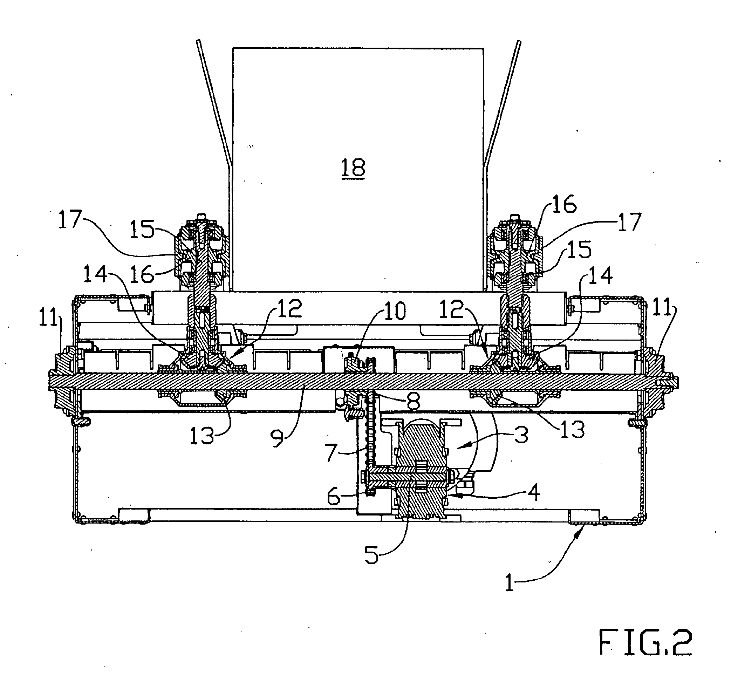

Said motor group 3 comprises a gearmotor 4 that commands a reducer shaft 5 on which a motor pinion 6 is splined that moves a chain 7 stretched between said motor pinion 6 and a second pinion 8 supported by a bearing 10 and splined on a transversal spline shaft 9 in the middle between the two sides of the frame 1 (Fig.2).

Sphere supports 11 are bound to the frame 1 and support the transversal shaft 9, on which two transmission groups 12 are splined comprising a horizontal conical pinion 13 and a vertical conical pinion 14 which allow the transmission of the rotative motion of the transversal shaft 9 to vertical shafts 15 that, by means of pulleys 16 splined thereon, move belts 17 that convey a box 18.

As regards the operation of the machine, the gearmotor 4, appropriately power supplied, moves the reducer shaft 5 that, by the transmission comprising the pinions 6, 8 and the chain 7, rotates the transversal spline shaft 9.

The transmission groups 12 allow to transmit the rotational motion from the transversal shaft 9 to the vertical shaft 15 by the mesh between the horizontal conical pinion 13 and the vertical conical pinion 14.

The pulleys 16 splined on the vertical shaft 15 transmit the motion to the vertical belts 17 that move perfectly synchronized, ensuring to the box 18 an effective movement without danger.

The splines of the transversal shaft 9 allow to move transversally the transmission groups 12 and thus the vertical shafts 15 also. In this way the distance between the vertical belts 17 can be set for the dimensions of the box 18.

The same movement device can be provided for horizontal conveying belts 17, instead of vertical ones, having regard to modify correctly the part of the device which moves directly the belts 17 (vertical shafts 15 and pulleys 16).

## Claims

1. Device for the motorization of conveying belts for the movement of parallelepiped boxes, comprising a frame (1) that supports a transversal spline shaft (9), and angle transmissions (12) splined on said shaft (9), provided with a couple of conical pinions (13-14) transmitting the motion to vertical shafts (15), whereby said shafts (15) move a couple of conveying belts (17), **characterised in that** an internal motor (3) is housed inside said frame (1) and drives the rotation of said transversal spline shaft (9) by a transmission between two pinions (6 and 8), the first (6) of which is splined on the shaft of said motor (3) and the second of which is splined on the transversal spline shaft (9), and said angle transmissions (12) are movable along said transversal spline shaft (9).

2. Device according to claim 1, **characterized in that** it comprises a gearmotor (4) connected with a reducer shaft (5).

3. Device according to claim 1, **characterized in that** said transmission comprises a connection chain (7) between the two pinions (6, 8).

4. Device according to claim 1, **characterized in that** said transversal spline shaft (9) is hold up by sphere supports (11) bound to the frame (1).

5. Device according to claim 1, **characterized in that** said pinion (8), splined on the transversal spline shaft (9) is supported by a bearing (10).

6. Device according to claim 1, **characterized in that** said conveying belts (17) are vertical.

7. Device according to claim 1, **characterized in that** said conveying belts (17) are horizontal.

8. Device according to claim 1, **characterized in that** said motor (3) is placed in a middle position between said two conveying belts (17).

## Patentansprüche

1. Motorische Antriebsvorrichtung für Förderbänder zur Bewegung von parallelepipedförmigen Schachteln, welche einen Rahmen (1) aufweist, welcher eine in Querrichtung verlaufende Keilwelle (9) und Winkelgetriebe (12) an der Welle (9) lagert, welche mit einem Paar von konischen Antriebsritzeln (13 - 14) versehen ist, welche die Bewegung auf vertikale Wellen (15) übertragen, wobei die Wellen (15) ein Paar von Förderbändern (17) bewegen, **dadurch gekennzeichnet, dass** im Innern des Rahmens (1) ein innerer Motor (3) untergebracht ist, und die Drehbewegung der in Querrichtung verlaufenden Keilwelle (9) durch ein Getriebe zwischen zwei Ritzel (6 und 8) antreibt, von denen das erste (6) auf die Welle des Motors (3) aufgekeilt ist, und das zweite auf die in Querrichtung verlaufende Keilwelle (9) aufgekeilt ist, und dass die Winkelgetriebe (12) längs der in Querrichtung verlaufenden Keilwelle (9) bewegbar sind.

2. Vorrichtung nach Anspruch 1, **dadurch gekennzeichnet, dass** sie einen Getriebemotor (4) aufweist, welche mit einer Reduzierwelle (5) verbunden ist.

3. Vorrichtung nach Anspruch 1, **dadurch gekennzeichnet, dass** das Getriebe eine Verbindungskette (7) zwischen den beiden Antriebsritzeln (6, 8) aufweist.

4. Vorrichtung nach Anspruch 1, **dadurch gekennzeichnet, dass** die in Querrichtung verlaufende Keilwelle (9) durch kugelförmige Abstützungen (11) gehalten ist, welche mit dem Rahmen (1) verbunden sind

5. Vorrichtung nach Anspruch 1, **dadurch gekennzeichnet, dass** das Antriebsritzel (8), welches auf die in Querrichtung verlaufende Keilwelle (9) aufgekeilt ist, durch die Anlage (10) abgestützt ist.

6. Vorrichtung nach Anspruch 1, **dadurch gekennzeichnet, dass** die Förderbänder (17) vertikal sind.

7. Vorrichtung nach Anspruch 1, **dadurch gekennzeichnet, dass** die Förderbänder (17) horizontal sind.

8. Vorrichtung nach Anspruch 1, **dadurch gekennzeichnet, dass** der Motor (3) an einer Mittelstelle zwischen den beiden Förderbändern (17) angeordnet ist.

## Revendications

1. Dispositif pour la motorisation de courroies de convoyage pour le déplacement de boîtes parallélépipédiques, comprenant un cadre (1) qui supporte un arbre cannelé transversal (9), et des transmissions en angle (12) calées sur ledit arbre (9), équipées d'une paire de pignons coniques (13-14) qui transmettent le mouvement à des arbres verticaux (15), grâce à quoi ledit arbre (9) déplace une paire de courroies de convoyage (17), **caractérisé en ce qu'**un moteur électrique (3) est abrité dans ledit cadre (1) et entraîne la rotation dudit arbre cannelé transversal (9) par une transmission entre deux pignons (6 et 8), le premier (6) étant calé sur l'arbre dudit moteur (3) et le second étant calé sur l'arbre cannelé transversal (9), et lesdites transmissions en angle (12) sont mobiles le long dudit arbre cannelé transversal (9).

2. Dispositif selon la revendication 1, **caractérisé en ce qu'**il comprend un groupe motoréducteur (4) relié à un arbre de réducteur (5).

3. Dispositif selon la revendication 1, **caractérisé en ce que** ladite transmission comprend une chaîne de liaison (7) entre les deux pignons (6, 8).

4. Dispositif selon la revendication 1, **caractérisé en ce que** ledit arbre cannelé transversal (9) est tenu par des supports sphériques (11) fixés sur le cadre (1).

5. Dispositif selon la revendication 1, **caractérisé en ce que** ledit pignon (8) calé sur l'arbre cannelé transversal (9) est supporté par un palier (10).

6. Dispositif selon la revendication 1, **caractérisé en ce que** lesdites courroies de convoyage (17) sont verticales.

7. Dispositif selon la revendication 1, **caractérisé en ce que** lesdites courroies de convoyage (17) sont horizontales.

8. Dispositif selon la revendication 1, **caractérisé en ce que** ledit moteur (3) est placé dans une position médiane entre lesdites de courroies de convoyage (17).
